# EUROPÄISCHE PATENTSCHRIFT

(11) **EP 2 829 760 B1**
(45) Veröffentlichungstag und Bekanntmachung des Hinweises auf die Patenterteilung: **12.07.2017**
(21) Anmeldenummer: 14001986.0
(22) Anmeldetag: 07.06.2014
(51) Int. Cl.: B25B 27/00, F16D 21/06

(54) **Zugvorrichtung für eine Doppelkupplung**
Pulling device for a dual clutch
Dispositif de traction pour un embrayage double

(30) Priorität: 20.07.2013 DE 202013006588 U
(43) Veröffentlichungstag der Anmeldung: 28.01.2015
(73) Patentinhaber: GEDORE Automotive GmbH, 78166 Donaueschingen (DE)
(72) Erfinder: Baur, Stefan, 78166 Donaueschingen-Pfohren (DE); Sjösten, Thomas, 78166 Donaueschingen (DE)
(74) Vertreter: Binner, Bernhard

(56) Entgegenhaltungen:
- DE-A1-102012 219 670
- DE-A1-102013 209 991
- DE-U- 8 221 579
- DE-U1-202010 011 709
- US-B1- 6 609 283
- US-B1- 7 322 087

## Beschreibung

Die Erfindung betrifft eine Zugvorrichtung für eine Doppelkupplung, welche axial feststehend auf einer Getriebewelle eines Doppelkupplungsgetriebes angeordnet ist und ein Kupplungsgehäuse aufweist, welches einen umlaufenden, im montierten Zustand von außen zugänglichen und radial nach innen gerichteten Gehäusesteg aufweist, bestehend aus
- einer Stützvorrichtung,
- einer mit der Stützvorrichtung feststehend in Verbindung stehenden Pressvorrichtung, welche eine axial verstellbare Druckstange aufweist, mit welcher sich die Pressvorrichtung beim Abziehvorgang an der Getriebewelle axial abstützen kann,
- mehreren Zugelementen, welche im Umfangsbereich der Druckstange angeordnet sind und mit der Doppelkupplung in Zugverbindung bringbar sind, wobei die Zugelemente in ihrem einen Endbereich radial nach außen vorstehende, mit dem Gehäusesteg formschlüssig in Eingriff bringbare Zugstege aufweisen und, wobei zwischen den Zugelementen ein Sicherungselement vorgesehen ist, mittels welchem die Zugelemente in ihrer Eingriffsposition gesichert sind.

Doppelkupplungen mit Doppelkupplungsgetrieben werden seit geraumer Zeit im Fahrzeugbau immer häufiger eingesetzt. Solche Doppelkupplungen unterscheiden sich von sogenannten Einfachkupplungen dadurch, dass diese nicht am Schwungrad bzw. an der Schwungscheibe des Kraftfahrzeugmotors angeflanscht sind, sondern im Bereich der beiden Getriebewellen als komplette Einheit auf diese aufgesetzt sind. Im montierten Zustand sitzt somit diese Kupplungseinheit der Doppelkupplung "versenkt" in der Kupplungsglocke, welche in der Regel die Verbindung zwischen dem Getriebe und dem Kraftfahrzeugmotor darstellt.

Somit ist die Doppelkupplung nach der Demontage des Getriebes zwar in axialer Richtung von außen zugänglich, jedoch in Umfangsrichtung und zum Getriebe hin durch die Kupplungsglocke umschlossen.

Bezüglich der Ausgestaltungen von Doppelkupplungen sei an dieser Stelle beispielhaft auf die DE 10 2009 039 991 A1, die DE 10 2009 042 071 A1 oder auch die DE 10 2009 048 277 A1 verwiesen.

Aufgrund der versenkt in der Kupplungsglocke angeordneten Ausgestaltung einer solchen Doppelkupplung ergeben sich insbesondere zum Abziehen der gesamten Doppelkupplung von der bzw. den Getriebewellen diverse Problematiken, da die eingeschränkte Zugänglichkeit das Ansetzen von Zugvorrichtungen erschwert.

Mit herkömmlichen Abziehvorrichtungen ist das Abziehen einer Doppelkupplung nur eingeschränkt oder gar nicht möglich.

Insoweit ist aus der DE 20 2010 011 295.8 U1 eine Vorrichtung zum Abziehen einer solchen Doppelkupplung bekannt geworden, welche diesen Umständen zum Teil Rechnung trägt.

Diese bekannte Vorrichtung besteht aus einer Stützvorrichtung und einer mit der Stützvorrichtung feststehend in Verbindung stehenden Pressvorrichtung, welche eine axial verstellbare Druckstange aufweist. Mit dieser Druckstange stützt sich die Pressvorrichtung beim Abziehvorgang an der Getriebewelle axial ab. Des Weiteren steht diese Stützvorrichtung mit mehreren Zugelementen in Verbindung, welche im Umfangsbereich der Druckstange angeordnet und mit der Doppelkupplung in Zugverbindung bringbar sind.

Bei dieser bekannten Vorrichtung sind die Zugelemente als eine Art Zughaken ausgebildet, welche im radial äußeren Randbereich des Gehäuses der Doppelkupplung an dieser feststehend ansetzbar sind. Sind diese Zughaken im radial äußeren Randbereich des Gehäuses der Doppelkupplung angesetzt, so kann die Stützvorrichtung zusammen mit der Pressvorrichtung auf die Zughaken aufgesetzt und mit diesen feststehend verbunden werden. Nach anschließender Betätigung der Pressvorrichtung drückt diese gegen die zentrale Getriebewelle, so dass sich dadurch eine Relativbewegung dieser Getriebewelle zur Doppelkupplung ergibt. Damit ist es mit dieser Vorrichtung in einfacher Weise möglich, eine Doppelkupplung von der Getriebewelle abzuziehen und somit aus der Kupplungsglocke zu entfernen.

Voraussetzung für den Einsatz dieser Vorrichtung zum Abziehen einer Doppelkupplung ist jedoch, dass zwischen dem radial äußeren Randbereich der Doppelkupplung und der Kupplungsglocke genügend Raum vorhanden ist, um die Zughaken auch im radial äußeren Randbereich ansetzen zu können.

Hierzu sind zwischenzeitlich jedoch Konstruktionen von Doppelkupplungen in Verbindung mit diese umschließenden Kupplungsglocken bekannt geworden, bei welchen ein solches Ansetzen der Zughaken im radial äußeren Randbereich der Doppelkupplung bzw. deren Gehäuse nur äußerst schwierig oder gar nicht durchführbar ist. Um die Zughaken dennoch in einem solch engen "Spalt" zwischen dem Gehäuse der Doppelkupplung und der Kupplungsglocke im radial äußeren Randbereich des Kupplungsgehäuses anzusetzen, wäre es möglich, die Querschnitte der Zughaken auf ein maximales Maß zu begrenzen. Dies führt allerdings bei größeren Zugkräften zur Deformierung der Zughaken, so dass ein sicheres Abziehen oder Ausziehen der Doppelkupplung nicht gewährleistet werden kann.

Aus der US 6 609 238 B1 ist eine Zugvorrichtung bekannt, welche von einer externen in eine interne Zugvorrichtung umgerüstet werden kann. Diese Zugvorrichtung dient beispielsweise zum Abziehen von Lagern und Lagerringen und von Gegenständen wie Achsen und Wellen und anderen Maschinenteilen. Diese Zugvorrichtung weist einen Tragrahmen und auch ein verlängertes Stützrohr auf, welches im Tragrahmen angeordnet ist. Das Stützrohr weist eine Gewindebohrung und auch ein Außengewinde auf. Des Weiteren ist eine Backenaufnahme vorgesehen, welche auf das Stützrohr verstellbar aufgeschraubt ist. Des Weiteren sind austauschbare Backen vorgesehen, welche mit Befestigungsmitteln schwenkbar an der Backenaufnahme angeordnet und am Tragrahmen geführt sind. Des Weiteren ist eine verlängerte Presseinrichtung vorgesehen, welche durch das Stützrohr hindurch geschraubt ist, und welche ein erstes und ein zweites Ende aufweist, welche mit einem Gegenstand in Eingriff gebracht werden können. Weiter ist eine Art Handgriff vorgesehen, welcher dazu dient, das Stützrohr drehend anzutreiben. Bei einer Ausführungsform weisen die Backen einen geraden Backenabschnitt auf, an dessen Ende ein nach außen gerichteter Haken vorgesehen ist, welcher mit einem Gegenstand in Eingriff gebracht werden kann. Die Backen sind dabei schwenkbar an der Backenaufnahme angeordnet. An die geraden Backenabschnitte schließen sich jeweils bogenförmig verlaufende Backenabschnitte an, welche am zentralen Tragrahmen geführt sind. Die bogenförmig verlaufenden Backenabschnitte stützen sich außenseitig am Tragrahmen ab und können bei Betätigung der Backenaufnahme am Tragrahmen radial nach außen gespreizt werden. Durch dieses Aufspreizen der Backen entstehen hohe Radialkräfte, so dass die Backen deformiert werden können. Des Weiteren ist die Handhabung sehr schwierig, da die Backen in der Backenaufnahme frei schwenkbar beweglich sind und somit insbesondere ein Ansetzen der Backen an einem abzuziehenden Gegenstand äußerst schwierig sein kann.

Demgemäß liegt der Erfindung die Aufgabe zugrunde, eine Zugvorrichtung für Doppelkupplungen derart auszugestalten, dass diese variabel, auch bei eingeschränkter Zugänglichkeit des äußeren Randbereiches des Gehäuses einer Doppelkupplung, einsetzbar ist.

Die Aufgabe wird zusammen mit den Merkmalen des Oberbegriffes des Anspruches 1 dadurch gelöst, dass das Sicherungselement plattenförmig ausgebildet ist und eine zentrale Durchgangsbohrung aufweist, durch welche ein auf die Druckstange aufsetzbares Druckstück im Einsatz hindurch ragt. Durch das im Wesentlichen formstabile, starre Sicherungselement mit seiner zentrale Durchgangsbohrung ist das Sicherungselement in Verbindung mit den Zugelementen sicher mit seinen radial nach außen vorstehenden Zugstegen mit dem Gehäusesteg einer Doppelkupplung formschlüssig in Eingriff bringbar, wobei diese Eingriffsposition durch das Sicherungselement absolut feststehend gesichert ist.

Durch die erfindungsgemäße Ausgestaltung kann folglich eine Doppelkupplung unabhängig von den räumlichen Gegebenheiten im Randbereich des Gehäuses einer Doppelkupplung an einer solchen Doppelkupplung angesetzt werden. Hierzu ist vorgesehen, dass die Zugelemente, in ihrem einen Endbereich radial nach außen vorstehend, mit dem Gehäusesteg des Kupplungsgehäuses formschlüssig in Eingriff bringbare Zugstege aufweisen.

Des Weiteren sind im Betrieb diese Zugelemente durch das Sicherungselement feststehend gesichert. Das Sicherungselement ist dabei derart zwischen die am Gehäusesteg der Doppelkupplung angesetzten Zugelemente einsetzbar, dass diese vom Gehäusesteg nicht mehr abrutschen können. Da die Zugelemente an dem radial nach innen gerichteten Gehäusesteg des Kupplungsgehäuses angesetzt werden, kann die erfindungsgemäße Vorrichtung unabhängig vom vorhandenen Zwischenraum zwischen der radial äußeren Randkante des Kupplungsgehäuses einer Doppelkupplung und der diese umgebenden Kupplungsglocke eingesetzt werden. Diese Ausgestaltung ermöglicht eine äußerst einfache und kostengünstige Herstellung des Sicherungselementes bei gleichzeitig einfacher Handhabung.

Weitere vorteilhafte Ausgestaltungen sind den weiteren Unteransprüchen zu entnehmen.

Weiter kann gemäß Anspruch 2 vorgesehen sein, dass die Zugstege der Zugelemente radial nach innen über die Zugelemente vorstehende Anschlagstege bilden, welche beim Abziehvorgang mit dem Sicherungselement derart in Wirkverbindung bringbar sind, dass sich das Sicherungselement mit den Zugelementen mitbewegt. Eine solche Ausgestaltung kann in den Fällen sinnvoll sein, in welchen sich das Sicherungselement beim Ausziehvorgang nicht oberseitig auf dem Kupplungsgehäuse oder beispielsweise der Nabe einer Mitnehmerscheibe einer Doppelkupplung abstützen kann. In einem solchen Fall würde das Sicherungselement zwischen den Zugelementen der Zugvorrichtung axial in Richtung der Doppelkupplung hindurch rutschen, so dass die Sicherungsfunktion nicht mehr gegeben wäre. Durch die Anschlagstege wird sichergestellt, dass das Sicherungselement sicher in einem axialen Bereich der Zugelemente gehalten wird, in welchem die Zugelemente durch das Sicherungselement in ihrer Eingriffposition mit dem Gehäusesteg der Doppelkupplung gehalten werden.

Durch die Ausgestaltung gemäß Anspruch 3 ist die Stützvorrichtung in äußerst einfacher Weise mit den Zugelementen koppelbar. Danach ist vorgesehen, dass die Stützvorrichtung radial zur Pressvorrichtung verlaufende Aufnahmeschlitze aufweist und, dass die Zugelemente mit in ihrem anderen Endbereich angeordneten Führungselementen versehen sind, auf welche die Stützvorrichtung mit ihren Aufnahmeschlitzen radial verstellbar und fixierbar aufsetzbar ist.

Durch die Ausgestaltung nach Anspruch 4 wird erreicht, dass die Zugelemente auf einer gemeinsamen Kreisbahn um die Pressvorrichtung mit den Aufnahmeschlitzen in Verbindung gebracht werden können, welche einen größeren Durchmesser aufweist als der Durchmesser des radial nach innen gerichteten Gehäusesteges des Kupplungsgehäuses der Doppelkupplung. Damit ist zwischen den Zugelementen im Bereich der Axialebene des Verbindungsbereichs der Zugelemente zur Stützvorrichtung stets genügend Raum vorhanden, um auch im Durchmesser größer dimensionierte Pressvorrichtungen einsetzen zu können. Auch ist durch diese Ausgestaltung die Zugvorrichtung mit ihren Zugelementen an einem Gehäuse einer Doppelkupplung sicher ansetzbar, bei welcher der Durchmesser des Gehäusesteges relativ klein bemessen ist. Demgemäß ist nach Anspruch 4 vorgesehen, dass das jeweilige Zugelement zwischen dem Führungselement und dem Zugsteg einen schräg radial nach innen zur Pressvorrichtung hin geneigt verlaufenden Zugschaft bildet.

Um die Zugelemente am Gehäusesteg einzeln sicher ansetzen zu können, ist die Ausgestaltung nach Anspruch 5 vorgesehen. Danach ist im Bereich des Zugschaftes ein Sicherungsbolzen vorgesehen, welcher mittels einer Axialdruckfeder axial zum Zugsteg hin verstellbar und außenseitig gegen das Kupplungsgehäuse oder den Gehäusesteg verspannbar ist. Durch den Sicherungsbolzen wird die am Gehäusesteg angesetzte Position der Zugelemente gesichert, so dass die Zugelemente vor dem Aufsetzen der Stützvorrichtung am Gehäusesteg mit ausreichendem Halt ansetzbar sind.

Zur zusätzlichen Sicherung oder alternativ zur gemäß Anspruch 5 vorgesehenen Axialdruckfeder kann gemäß Anspruch 6 auch vorgesehen sein, dass der Sicherungsbolzen in seinem zum Zugsteg hin liegenden Endbereich ein Kopfteil aufweist, in welchem ein Permanentmagnet angeordnet ist. Im montierten Zustand liegt der Sicherungsbolzen mit seinem Kopfteil oberseitig im Bereich des Gehäusesteges auf diesem selbst oder auf dem benachbarten Bereich des Gehäuses der Doppelkupplung auf. Durch den Permanentmagneten wird das Kopfteil gegen die Oberfläche des Gehäuses gezogen, so dass das Kopfteil und somit der Sicherungsbolzen zusammen mit dem Zugelement in der am Gehäusesteg angesetzten Position annähernd unverrückbar gesichert ist.

Weiter kann gemäß Anspruch 7 vorgesehen sein, dass das Sicherungselement in seinem radial außen liegenden Umfangsbereich mehrere radial nach innen gerichtete Aussparungen aufweist, von welchen jede zur Aufnahme jeweils eines Zugelementes im Bereich des Zugsteges dient. Durch diese Ausgestaltung sind die Zugelemente vorab präzise am Gehäusesteg des Kupplungsgehäuses positionierbar. Damit ist die Stützvorrichtung mit ihren Aufnahmeschlitzen nach dem Ansetzen der Zugelemente am Gehäusesteg in einfacher Weise auf die Zugelemente aufsetzbar, ohne dass die Zugelemente am Gehäusesteg "nachjustiert" werden müssen.

Weiter kann gemäß Anspruch 8 vorgesehen sein, dass der Durchmesser der Durchgangsbohrung des Stützelementes und der Durchmesser des Druckstückes derart aufeinander abgestimmt sind, dass das Druckstück durch das Sicherungselement konzentrisch zwischen den Zugelementen ausgerichtet ist. Auch durch diese Ausgestaltung wird das Ansetzen der Stützvorrichtung zusammen mit der Pressvorrichtung erheblich vereinfacht. Dadurch, dass das Druckstück durch das Sicherungselement konzentrisch zu den Zugelementen ausgerichtet ist, wird die Stützvorrichtung beim Aufsetzen auf die Zugelemente ebenfalls konzentrisch zu den Zugelementen und damit konzentrisch zur Doppelkupplung ausgerichtet, so dass insbesondere die Druckstange der Pressvorrichtung koaxial zum Druckstück ausgerichtet ist.

Anhand der Zeichnung wird nachfolgend beispielhaft die Erfindung näher erläutert. Es zeigt:
- Fig. 1: eine perspektivische Explosionsdarstellung einer möglichen Ausführungsvariante eines Zugelementes;
- Fig. 2: die Bauteile des Zugelementes aus Fig. 1 im montierten Zustand;
- Fig. 3: einen perspektivischen Teilschnitt des Zugelementes aus den Fig. 1 und 2 in seinem, an einem Gehäusesteg eines Kupplungsgehäuses einer Doppelkupplung angesetzten Zustand;
- Fig. 4: eine perspektivische Darstellung der grundsätzlichen, räumlichen Anordnung von Zugelementen beim Einsatz von insgesamt drei Zugelementen;
- Fig. 5: eine erste Ausführungsvariante eines Sicherungselementes, mittels welchem die drei Zugelemente in der in Fig. 4 beispielhaft dargestellten "Eingriffsposition" gesichert werden können;
- Fig. 6: eine perspektivische Darstellung einer zweiten Ausführungsvariante eines Sicherungselementes;
- Fig. 7: eine perspektivische Darstellung einer möglichen Ausführungsvariante einer Stützvorrichtung, welche mit den drei Zugelementen aus Fig. 4 koppelbar ist;
- Fig. 8: eine perspektivische Darstellung einer möglichen Ausführungsvariante eines Druckstückes, welches mit der Pressvorrichtung der Stützvorrichtung aus Fig. 7 koppelbar ist;
- Fig. 9: die drei Zugelemente aus Fig. 4 in ihrem, am Kupplungsgehäuse einer Doppelkupplung angesetzten Zustand, wobei deren Eingriffposition am Gehäusesteg des Kupplungsgehäuse durch das Sicherungselement aus Fig. 5 gesichert ist;
- Fig. 10: eine perspektivische Darstellung der kompletten Zugvorrichtung in ihrem, am Kupplungsgehäuse der Doppelkupplung aus Fig. 9 angesetzten Zustand.

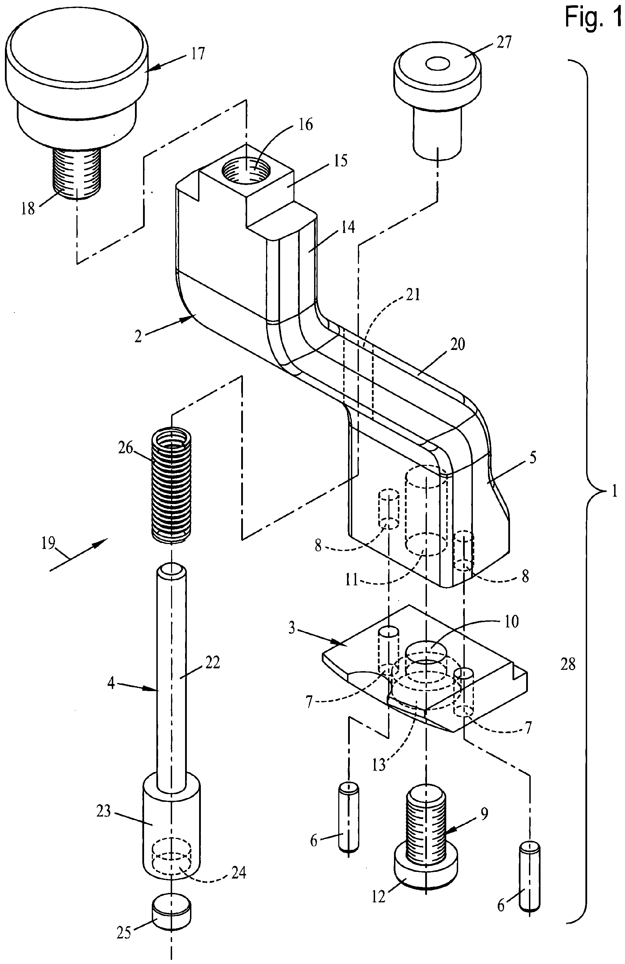

Fig. 1 zeigt eine perspektivische Explosionsdarstellung der Bestandteile eines Zugelementes 1, welches bei der dargestellten Ausführungsvariante aus einem Grundkörper 2, einem Zugsteg 3 und einem Sicherungsbolzen 4 besteht.

Der Grundkörper 2 bildet in seinem einen, unteren Endbereich einen Montageabschnitt 5, welcher im Betrieb im Wesentlichen vertikal verlaufend ausgerichtet ist. Unterseitig ist an diesem Montageabschnitt 5 der Zugsteg 3 feststehend montierbar. Zur präzisen Ausrichtung des Zugsteges 3 am Montageabschnitt 5 und somit am Grundkörper 2 sind bei der vorliegenden Ausführungsvariante zwei Passstifte 6 vorgesehen. Diese sind entsprechend in zwei Aufnahmebohrungen 7 des Zugsteges 3 einerseits und zwei entsprechend unterseitig angeordnete Sacklochbohrungen 8 des Montageabschnittes 5 einsetzbar.

Zur feststehenden Festlegung des Zugsteges 3 am Montageabschnitt 5, ist eine zentrale Befestigungsschraube 9 vorgesehen, welche durch eine entsprechende Durchgangsbohrung 10 des Zugsteges 3 hindurch steckbar und in ein entsprechendes Innengewinde 11 des Montageabschnittes 5 einschraubbar ist. Zur versenkten Aufnahme des Schraubenkopfes 12 im Zugsteg 3 ist die Durchgangsbohrung 10 unterseitig mit einer entsprechend radial erweiterten Einsenkung 13 versehen.

Des Weiteren ist aus Fig. 1 ersichtlich, dass der Grundkörper 2 in seinem anderen, oberen Endbereich ein Führungselement 14 aufweist, welches im Einsatz des Zugelementes 1 ebenfalls in etwa parallel zum Montageabschnitt 5 verlaufend vertikal ausgerichtet ist. Oberseitig weist das Führungselement 14 ein vertikal nach oben vorstehendes Gleitstück 15 auf, mit welchem das Führungselement 14 mit einer Stützvorrichtung verstellbar und fixierbar in Eingriff bringbar ist.

Zur feststehenden Montage des Zugelementes 1 an einer solchen Stützvorrichtung ist im Bereich des Führungselementes 14 bzw. dessen Gleitstück 15 ein entsprechendes, zentrales Innengewinde 16 vorgesehen. In dieses Innengewinde 16 ist eine Rändelschraube 17 einschraubbar, welche zu diesem Zweck einen vertikal nach unten gerichteten Gewindezapfen 18 aufweist.

Des Weiteren ist aus Fig. 1 ersichtlich, dass das Führungselement 14 und der Montageabschnitt 5 über einen vertikal von oben nach unten und in radialer Richtung des Pfeiles 19 schräg verlaufenden Zugschaft 20 miteinander in Verbindung stehen. Im Bereich dieses schräg verlaufenden Zugschaftes 20 ist eine im Betrieb vertikal verlaufende Durchgangsbohrung 21 vorgesehen, durch welche hindurch der Sicherungsbolzen 4 mit einem entsprechenden Führungsschaft 22 von unten nach oben hindurch steckbar ist. Am unteren Ende des Führungsschaftes 22 des Sicherungsbolzens 4 ist ein radial erweitertes Kopfteil 23 vorgesehen, welches unterseitig mit einer zylindrischen Aussparung 24 ausgestattet ist. In diese zylindrische Aussparung 24 ist ein Permanentmagnet 25 festsitzend einsetzbar.

Des Weiteren ist aus Fig. 1 ersichtlich, dass auf den Führungsschaft 22 eine Axialdruckfeder 26 aufschiebbar ist, welche sich im Betrieb einerseits unterseitig am Kopfteil 23 und andererseits oberseitig am Zugschaft 20 des Grundkörpers 2 axial abstützt. Zur Betätigung des am Zugschaft 20 montierten Sicherungsbolzens 4 ist ein oberes Kopfteil 27 vorgesehen, welches im montierten Zustand feststehend auf das obere Ende des Führungsschaftes 22 aufgesetzt ist. Als Verbindung zwischen diesem oberen Kopfteil 27 und dem Führungsschaft 22 kann hier eine Pressverbindung, Gewindeverbindung oder auch eine Schweißverbindung vorgesehen sein.

Weiter ist aus Fig. 1 ersichtlich, dass der Zugsteg 3 in seinem, in Richtung des Pfeiles 19 radial innen liegenden Bereich seiner Unterkante einen radial nach innen vorstehenden Anschlagsteg 28 bildet, welcher in bestimmten Anwendungsfällen zur vertikalen Abstützung eines Sicherungselementes dient.

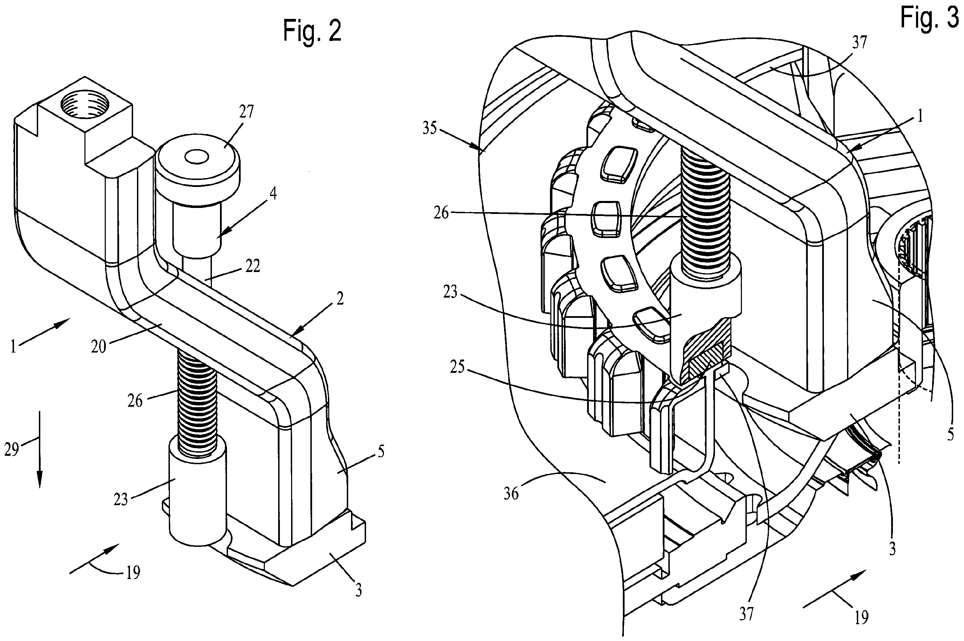

Fig. 2 zeigt eine perspektivische Darstellung des Zugelementes 1 aus Fig. 1 im zusammengebauten Zustand. In Fig. 2 wurde dabei der Übersichtlichkeit halber die Rändelschraube 17 aus Fig. 1 nicht dargestellt.

Es ist erkennbar, dass der Sicherungsbolzen 4 den Zugschaft 20 mit seinem Führungsschaft 22 durchragt. Die Axialdruckfeder 26 ist unterhalb des Zugschaftes 20 zwischen diesem und dem radial erweiterten Kopfteil 23 des Sicherungsbolzens 4 angeordnet. Die Axialdruckfeder 26 bewirkt in vertikaler bzw. axialer Richtung des Pfeiles 29 Stellkräfte "nach unten", so dass der Sicherungsbolzen 4 mit seinem Kopfteil 23 vertikal gegen das Gehäuse einer Doppelkupplung pressbar ist.

Der Zugsteg 3 ist unterseitig am Montageabschnitt 5 des Grundkörpers 2 feststehend montiert. In diesem montierten Zustand steht der Zugsteg zum Kopfteil 23 des Sicherungsbolzens 4 hin über den Montageabschnitt 5 radial nach außen entgegen des Pfeils 19 vor und bildet somit eine Art Anschlag. Somit ist das Zugelement 1 mit seinem Zugsteg 3 mit einem radial in Richtung des Pfeils 19 nach innen gerichteten Gehäusesteg eines Kupplungsgehäuses formschlüssig in Eingriff bringbar. In einer solchen Eingriffposition können somit durch das Zugelement 1 Zugkräfte auf eine Doppelkupplung zum Zwecke des Abziehens aufgebracht werden.

Zum Ansetzen des Zugelementes 1 an einem solchen Gehäusesteg des Kupplungsgehäuses ist der Sicherungsbolzen 4 zunächst über sein aufgesetztes Kopfteil 27 entgegen des Pfeiles 29 vertikal nach oben zu verstellen. Nachdem der unterseitig am Montageabschnitt 5 befestigte Stützsteg 3 mit dem Gehäusesteg des Kupplungsgehäuses einer Doppelkupplung in Eingriff gebracht ist, wird das Kopfteil 27 des Sicherungsbolzens 4 wieder frei gegeben, so dass der Sicherungsbolzen 4 auf Grund der Federkraft der Axialdruckfeder 26 mit seinem Kopfteil 23 oberseitig gegen das Gehäuse der Doppelkupplung bzw. dessen Gehäusesteg drückt. Damit ist das Zugelemente 1 in einfacher Weise selbstständig haltend an einem solchen Gehäusesteg einer Doppelkupplung ansetzbar.

Einen solchen angesetzten Zustand zeigt Fig. 3. In Fig. 3 ist "nur" ein Teil einer Doppelkupplung 35 dargestellt, welcher für die Erläuterung der Funktionsweise der erfindungsgemäßen Zugvorrichtung erforderlich ist. So ist aus Fig. 3 der "obere", im montierten Zustand an einer Getriebewelle nach "außen" zugängliche Teil eines Kupplungsgehäuses 36 der Doppelkupplung 35 erkennbar. Dieses Kupplungsgehäuse 36 bildet einen in Richtung des Pfeils 19 radial nach innen vorstehenden Gehäusesteg 37. An diesem Gehäusesteg 37 ist das Zugelement 1 aus den Fig. 1 und 2 angesetzt. Wie aus Fig. 3 erkennbar ist, hintergreift das Zugelement 1 den Gehäusesteg 37 des Kupplungsgehäuses 36 und steht mit diesem unterseitig formschlüssig in Eingriff. Das Kopfteil 23 des aus Fig. 2 ersichtlichen Sicherungsbolzens 4 wird in dieser am Gehäusesteg 37 angesetzten Position durch die Axialdruckfeder 26 oberseitig gegen diesen Gehäusesteg 37 bzw. dementsprechend gegen das Kupplungsgehäuse 36 gedrückt.

Damit wird das Zugelement 1 mit seinem Zugsteg 3, welcher radial entgegen des Pfeiles 19 über den Montageabschnitt 5 des Grundkörpers 2 nach außen vorsteht, in seiner Eingriffsposition mit dem Gehäusesteg 37 fixiert. Der in das Kopfteil 23 eingesetzte und im Teilschnitt in Fig. 3 dargestellte Permanentmagnet 25 dient hierbei zur zusätzlichen, abrutschsicheren Fixierung des Kopfteiles 23 am Gehäusesteg 37, so dass das Zugelement 1 in dem in Fig. 3 dargestellten, angesetzten Zustand, selbstständig am Gehäusesteg 37 haltend befestigt ist.

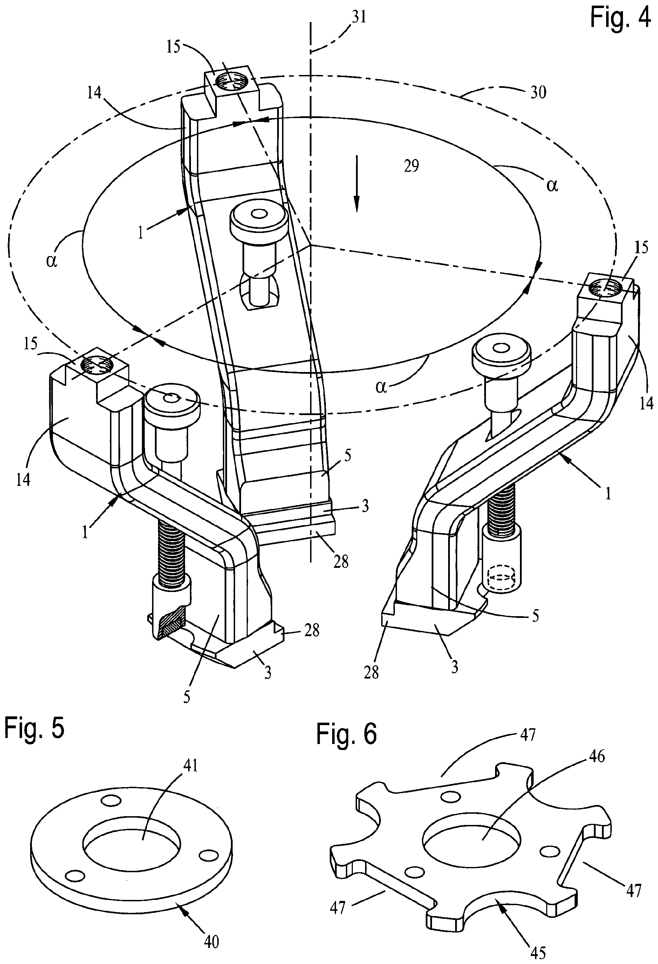

Zum Abziehen einer Doppelkupplung werden vorzugsweise insgesamt drei Zugelemente 1, deren relative Lage zueinander in Fig. 4 schematisch dargestellt ist. In dieser in Fig. 4 schematisch dargestellten "Eingriffposition" stehen alle drei Zugelemente 1 mit dem zu Fig. 3 beschriebenen Gehäusesteg 37 der Doppelkupplung 35 in Eingriff. Es ist erkennbar, dass die Zugelemente 1 mit ihren Gleitstücken 15 ihrer Führungselemente 14 auf einer gemeinsamen Kreisbahn 30 angeordnet sind. Nachdem die Zugelemente 1 in die in Fig. 4 Eingriffposition gebracht sind, kann auf diese oberseitig eine Stützvorrichtung mit Pressvorrichtung aufgesetzt werden. Dabei ist die gesamte Vorrichtung mit der durch die Kreisbahn 30 definierte Längsmittelachse 31 auf eine Getriebewelle während des Ausziehvorganges bei korrekt angesetzten Zugelementen 1 ausrichtbar. Damit können, aufgrund dieser dreifachen Anordnung von drei Zugelementen 1 auf den in Fig. 3 dargestellten Gehäusesteg 37 gleichmäßig Zugkräfte entgegen des Pfeiles 29 auf das Kupplungsgehäuse 36 und somit auf die gesamte Doppelkupplung 35 aus Fig. 3 zum Zwecke des Abziehens aufgebracht werden.

Zur Sicherung der in Fig. 4 schematisch dargestellten Eingriffspositionen der drei Zugelemente 1 ist ein Sicherungselement 40 vorgesehen, welches nach Fig. 5 als Ringscheibe ausgebildet sein kann. Diese Ringscheibe 40 bildet eine zentrale Durchgangsbohrung 41, durch welche hindurch im Betrieb ein Druckstück hindurch verstellbar ist, über welches entsprechende Presskräfte auf die Getriebewelle aufbringbar sind, wie später noch näher erläutert wird.

Fig. 6 zeigt eine zweite Ausführungsvariante eines solchen Sicherungselementes 45, welches ebenfalls eine zentrale Durchgangsbohrung 46 zum selben Zweck aufweist. Diese Ausführungsvariante des Sicherungselementes 45 nach Fig. 6 weist insgesamt drei gleichmäßig am Umfang verteilte, radial nach innen gerichtete Aussparungen 47 auf, mit welchen das Sicherungselement 45 passend mit den aus Fig. 4 ersichtlichen drei Montageabschnitten 5 der drei Zugelemente 1 bzw. deren Zugstege 3 in Eingriff bringbar ist.

Um zu verhindern, dass das Sicherungselement 45 oder auch das Sicherungselement 40 in Richtung des Pfeiles 29 zwischen den Führungsabschnitten 5 bzw. den Zugstegen 3 hindurchrutschen kann, sind die zu Fig. 1 beschriebenen Anschlagstege 28 der Zugstege 3 vorgesehen, welche, wie dies aus Fig. 4 ersichtlich ist, radial zur Längsmittelachse 31 hin nach innen vorstehen.

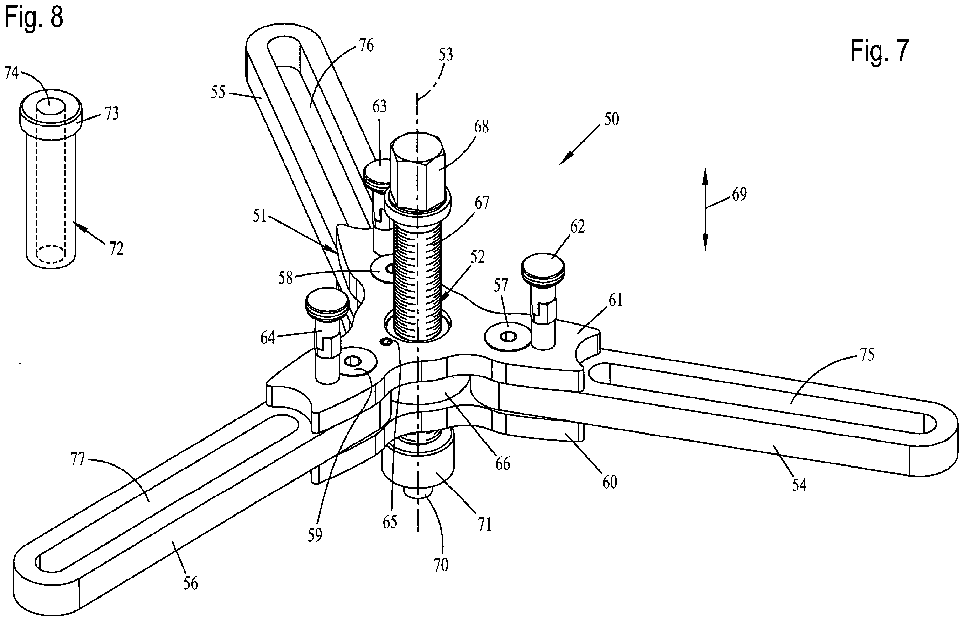

Um nun Zugkräfte über die Zugelemente 1 auf die Doppelkupplung aufbringen zu können, ist ein Grundgerät 50 vorgesehen, welches aus Fig. 7 in perspektivischer Darstellung erkennbar ist.

Das Grundgerät 50 nach Fig. 7 besteht aus einer Stützvorrichtung 51, in welcher zentral eine Pressvorrichtung 52 integriert ist. Die Stützvorrichtung 51 der dargestellten Ausführungsvariante ist in ihrem grundsätzlichen Aufbau aus der DE 20 2010 011 295.8 U1 bekannt. Wie aus Fig. 7 ersichtlich ist, weist die Stützvorrichtung 51 selbst insgesamt drei bezüglich ihrer Längsmittelachse 53 in ihren Grundstellungen radial verlaufende Stützarme 54, 55 und 56 auf. Diese Stützarme 54, 55 und 56 sind über entsprechende Lagerschrauben 57, 58 und 59 schwenkbar zwischen zwei Lagerplatten 60 aufgenommen.

Zur Fixierung der in Fig. 7 dargestellten Grundstellung, in welcher die radial verlaufenden Stützarme 54, 55 und 56 unter jeweils einem Winkel α von 120° zueinander verlaufen, sind entsprechende "Raststifte" 62, 63 und 64 vorgesehen. Zur detaillieren Ausgestaltung und Funktion der Raststifte 62, 63, 64 wird voll umfänglich auf die DE 20 2010 011 295.8 U1 verwiesen.

Für das Abziehen einer Doppelkupplung von der Getriebewelle ist allerdings diese schwenkbare Ausbildung der drei Stützarme 54, 55 und 56 ist für das Abziehen einer Doppelkupplung nicht zwingend erforderlich. Jedoch hat diese schwenkbare Verstellbarkeit den Vorteil, dass die Positionierung der drei Zugelemente 1 auch in anderer Weise als zu Fig. 4 dargestellt erfolgen kann, sofern die Ausgestaltung eines Gehäusesteges einer Doppelkupplung dies erforderlich macht. So können durch diese schwenkbare Lagerung der Stützarme 54, 55 und 56 auch unterschiedliche "Umfangsabstände" der Zugelemente 1 in ihren Eingriffpositionen gewählt werden.

Weiter ist aus Fig. 7 erkennbar, dass die Pressvorrichtung 52 radial innerhalb der Stützarme 54, 55 und 56 zentral angeordnet ist. Bei der dargestellten Ausführungsvariante weist die Pressvorrichtung 52 eine über einen Kerbstift 65 unverdrehbar, zentral zwischen zwei Lagerplatten 60 und 61 angeordnete Gewindebuchse 66 auf. Diese Gewindebuchse 66 dient zur verstellbaren Aufnahme einer als Druckspindel 67 ausgebildeten Druckstange, welche in ihrem oberen Endbereich mit einem Antriebssechskant 68 versehen ist. Durch Betätigen dieses Antriebssechskantes 68 und damit durch Drehung der Druckspindel 67 wird somit eine Stellbewegung der Druckspindel 67 in Richtung des Doppelpfeiles 69 bewirkt.

In ihrem unteren Endbereich, dem Antriebssechskant 68 axial gegenüberliegend, weist die Druckspindel 67 einen axial nach unten vorstehenden Lagerzapfen 70 auf, auf welchen ein Axialdrucklager 71 aufgesetzt ist. Der Lagerzapfen 70 überragt dabei das Axialdrucklager 71 vertikal nach unten, so dass auf den Lagerzapfen 70 ein Druckstück 72 in axialer Verlängerung aufsetzbar ist.

Das in Fig. 8 beispielhaft dargestellte Druckstück 72 bildet im oberen Endbereich einen radial erweiterten Lagerbund 73, mit welchem sich das Druckstück 72 im Betrieb unterseitig am Axialdrucklager 71 der Druckspindel 67 abstützt. Zum Aufsetzen auf den Lagerzapfen 70 weist das Druckstück 72 eine entsprechende Durchgangsbohrung 74 auf, welche auch als Sacklochbohrung ausgebildet sein kann.

Wie aus Fig. 7 ersichtlich ist, weist jeder der Stützarme 54, 55 und 56 einen radial verlaufenden Aufnahmeschlitz 75, 76 und 77 auf, welche zur radial verstellbaren und fixierbaren Aufnahme jeweils eines Zugelementes 1 dienen. Hierzu wird zur Fixierung das jeweilige Gleitstück 15 eines Zugelementes 1 aus den Figuren 1, 2 oder 4 mit dem jeweiligen Aufnahmeschlitz 75, 76 bzw. 77 eines Stützarmes 54, 55, bzw. 56 in Eingriff gebracht und in der jeweils relativ zur Presseinrichtung 52 eingestellten Radialposition durch Anziehen der jeweils zugehörigen, aus Fig. 1 erkennbaren Rändelschraube 17 gesichert.

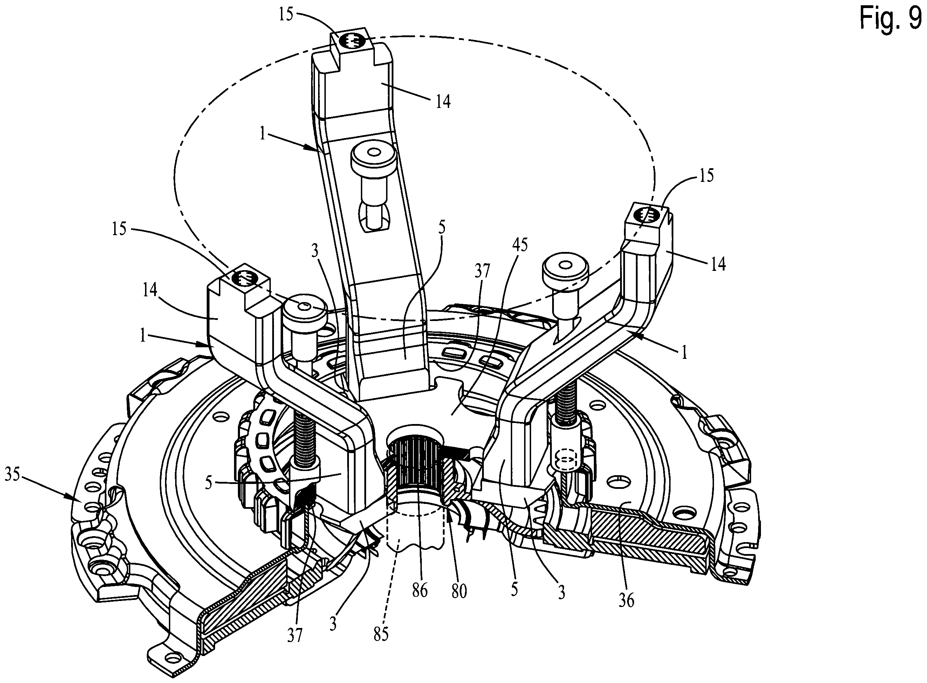

Für den Einsatz der erfindungsgemäßen Zugvorrichtung sind zunächst drei Zugelemente 1 am Gehäusesteg 36 der Doppelkupplung 35 bzw. des entsprechenden Gehäuseteils 36 in der aus Fig. 4 dargestellten Winkelposition zueinander anzusetzen, wie dies aus Fig. 9 ersichtlich ist. Sollte auf Grund einer speziellen Ausgestaltung des Gehäusestege 37 ein gleichmäßig am Umgang verteilte Ansetzen der drei Zugelemente 1 nicht möglich sein, so können auch andere Umfangsabstände gewählt werden. Das Ansetzen aller drei Zugelemente 1 erfolgt, wie bereits zu Fig. 3 beschrieben.

Nach dem Ansetzen der drei Zugelemente 1 in den in Fig. 9 dargestellten Eingriffspositionen werden die drei Zugelemente 1 mittels des Sicherungselementes 45 aus Fig. 6 gesichert. Sind die drei Zugelemente 1 nicht gleichmäßig am Umfang verteilt am Gehäusesteg 37 des Kupplungsgehäuse 36 angeordnet, so kann das Sicherungselement 40 aus Fig. 5 zwischen die Zugelemente 1 zu Sicherung der Eingriffsposition eingesetzt werden.

Bei der dargestellten Ausführungsvariante der Doppelkupplung 35 stützt sich das Sicherungselement 45 vertikal auf der Nabe 80 der Doppelkupplung 35 ab. Für diesen Anwendungsfall sind somit die drei Anschlagstege 28 der Zugstege 3 (Fig. 4) nicht zwingend zur Halterung des Sicherungselementes 45 "zwischen" den Montageabschnitten 5 der Zugelemente 1 notwendig.

Weiter ist aus Fig. 9 in gestrichelten Linien eine Getriebewelle 85 erkennbar, auf welcher eine Nabe 80 der Doppelkupplung 35 mit einer entsprechenden Keilwellenverzahnung 86 aufgesetzt ist. Um nun die Doppelkupplung 35 mit ihrer Nabe 80 von der Getriebewelle 85 abziehen zu können, ist die erfindungsgemäße Zugvorrichtung vorgesehen.

Nachdem die drei Zugelemente 1 am Gehäusesteg 37 angesetzt und fixiert sind, kann nun auf die drei Gleitstücke 15 des jeweiligen Führungsabschnittes 14 das Grundgerät 50 mit seinen drei Stützarmen 54, 55 und 56 aus Fig. 7 aufgesetzt werden. Nach dem Aufsetzen des Grundgerätes 50 aus Fig. 7 werden die drei Zugelemente 1 jeweils mittels der zugehörigen Rändelschraube 17 an den Stützarmen 54, 55 und 56 feststehend fixiert.

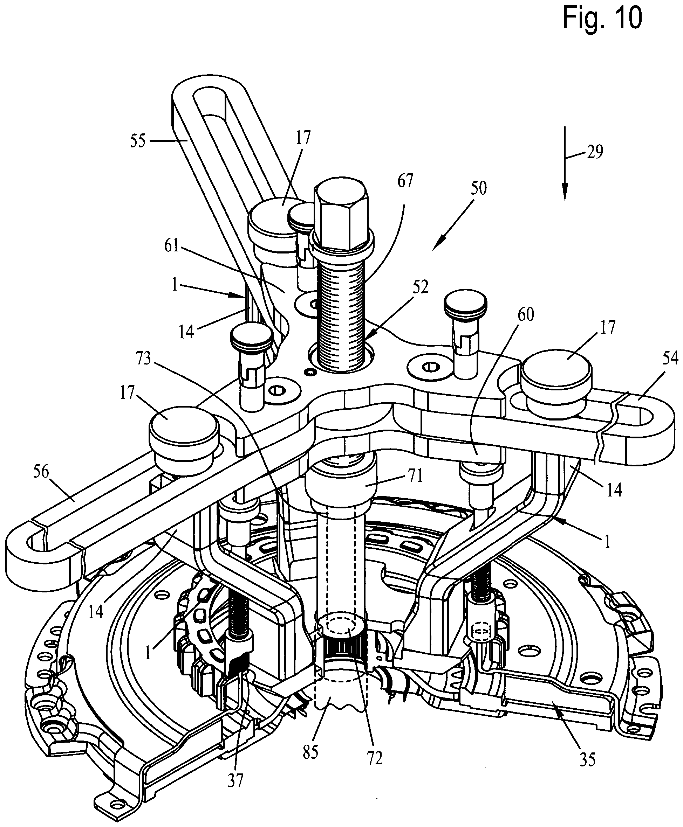

Diesen fertig montierten Zustand zeigt Fig. 10 in perspektivischer Darstellung. Es ist erkennbar, dass die Führungselemente 14 der drei Zugelemente 1 über die entsprechenden Rändelschrauben 17 feststehend an den drei Stützarmen 54, 55 und 56 befestigt sind.

Dabei ist das Druckstück 72 unterseitig auf die Druckspindel 67 aufgesteckt und liegt mit seinem Lagerbund 73 unterseitig am Axialdrucklager 71 der Druckspindel 67 an. Mit seinem unteren Endbereich liegt das Druckstück 72 auf der oberen Stirnfläche der Getriebewelle 85 auf.

Wird nun die Druckspindel 67 betätigt, so drückt diese in Richtung des Pfeiles 29 vertikal nach unten gegen die Getriebewelle 85. Aufgrund des Eingriffs der drei Zugelemente 1 mit dem Gehäusesteg 37, werden dementsprechend bei Verstellung der Druckspindel 67 entgegen des Pfeiles 29, Ausziehkräfte auf die Doppelkupplung 35 bewirkt.

Der Durchmesser des Druckstückes 72 ist derart gewählt, dass dieses beim Abziehvorgang in die Keilwellenverzahnung 86 der Nabe 80 hinein gleiten kann bzw. die Nabe 80 entlang des Druckstückes 72 entgegen des Pfeils 29 "vertikal nach oben" gezogen und somit die gesamt Doppelkupplung 35 abgezogen wird. Die axial Länge des Druckstückes 72 kann beispielsweise auf die axiale Länge der Nabe 80 abgestimmt sein, so dass auch ein ausreichender Stellweg zum vollständigen Abziehen zur Verfügung steht.

Aufgrund der radial abgesetzten, abgekröpften Ausbildung der drei Zugelemente 1, können diese mit ihren Führungselementen 14 in einem radial weiter außen liegenden Bereich mit den Stützarmen 54, 55 und 56 in Eingriff gebracht werden. Der Innendurchmesser des Gehäusesteges 37 ist dabei wesentlich kleiner als die Kreisbahn 30 aus Fig. 4, auf welcher die Gleitstücke 15 mit ihren Führungselementen 14 angeordnet sind. Diese abgekröpfte Ausbildung des Grundkörpers 2 der Zugelemente 1 hat den Vorteil, dass radial innerhalb dieser Eingriffspositionen der Gleitstücke 15 mit den Stützarmen 54, 55 und 56 zentral auch eine Pressvorrichtung größeren Durchmessers eingesetzt werden kann, da in diesem Bereich genügend Raum vorhanden ist.

Des Weiteren ist auch ein Grundgerät 50 in der dargestellten Ausführungsvariante einsetzbar, ohne dass hier Kollisionen mit der zentral vorgesehenen Pressvorrichtung oder auch mit den beiden Lagerplatten 60 und 61 der Stützvorrichtung 51 auftreten können.

Dabei kann die Stützvorrichtung 51 jedoch auch einfacher ausgebildet sein. So ist ebenfalls vorstellbar, dass es sich hierbei um eine kreisrunde, plattenförmige Stützvorrichtung handelt oder, dass die drei Stützarme 54, 55 und 56 einstückiger Bestandteil einer Stützplatte, welche ein entsprechend sternförmige Außenkontur aufweist.

## Patentansprüche

1. Zugvorrichtung für eine Doppelkupplung (35), welche axial feststehend auf einer Getriebewelle (85) eines Doppelkupplungsgetriebes angeordnet ist und ein Kupplungsgehäuse (36) aufweist, welches einen umlaufenden, im montierten Zustand von außen zugänglichen und radial nach innen gerichteten Gehäusesteg (37) aufweist, bestehend aus
- einer Stützvorrichtung (51),
- einer mit der Stützvorrichtung (51) feststehend in Verbindung stehenden Pressvorrichtung (52), welche eine axial verstellbare Druckstange (67) aufweist, mit welcher sich die Pressvorrichtung (52) beim Abziehvorgang an der Getriebewelle (85) axial abstützen kann,
- mehreren Zugelementen (1), welche im Umfangsbereich der Druckstange (67) angeordnet sind und mit der Doppelkupplung (35) in Zugverbindung bringbar sind,
wobei die Zugelemente (1) in ihrem einen Endbereich radial nach außen vorstehende, mit dem Gehäusesteg (37) formschlüssig in Eingriff bringbare Zugstege (3) aufweisen und,
wobei zwischen den Zugelementen (1) ein Sicherungselement (40, 45) vorgesehen ist, mittels welchem die Zugelemente (1) in ihrer Eingriffsposition gesichert sind,
**dadurch gekennzeichnet,**
**dass** das Sicherungselement (40, 45) plattenförmig ausgebildet ist und eine zentrale Durchgangsbohrung (41, 46) aufweist, durch welche ein auf die Druckstange (67) aufsetzbares Druckstück (72) im Einsatz hindurchragt.

2. Zugvorrichtung nach Anspruch 1, **dadurch gekennzeichnet, dass** die Zugstege (3) der Zugelemente (1) radial nach innen über die Zugelemente (3) vorstehende Anschlagstege (28) bilden, welche beim Abziehvorgang mit dem Sicherungselement (40, 45) derart in Wirkverbindung bringbar sind, dass sich das Sicherungselement (40, 45) mit den Zugelementen (1) mitbewegt.

3. Zugvorrichtung nach Anspruch 1 oder 2, **dadurch gekennzeichnet, dass** die Stützvorrichtung (51) radial zur Pressvorrichtung (52) verlaufende Aufnahmeschlitze (75, 76, 77) aufweist und, dass die Zugelemente (1) mit in ihrem anderen Endbereich angeordneten Führungselementen (14) versehen sind, auf welche die Stützvorrichtung (51) mit ihren Aufnahmeschlitzen (75, 76, 77) radial verstellbar und fixierbar aufsetzbar ist.

4. Zugvorrichtung nach Anspruch 3, **dadurch gekennzeichnet, dass** das jeweilige Zugelement (1) zwischen dem Führungselement (14) und dem Zugsteg (3) einen schräg radial nach innen zur Pressvorrichtung (52) hin geneigt verlaufenden Zugschaft (20) bildet.

5. Zugvorrichtung nach Anspruch 4, **dadurch gekennzeichnet, dass** im Bereich des Zugschaftes (20) ein Sicherungsbolzen (4) vorgesehen ist, welcher mittels einer Axialdruckfeder (26) axial zum Zugsteg (3) hin verstellbar und außenseitig gegen das Kupplungsgehäuse (36) oder den Gehäusesteg (37) verspannbar ist.

6. Zugvorrichtung nach Anspruch 5, **dadurch gekennzeichnet, dass** der Sicherungsbolzen (4) in seinem zum Zugsteg (3) hin liegenden Endbereich ein Kopfteil (23) aufweist, in welchem ein Permanentmagnet (25) angeordnet ist.

7. Zugvorrichtung nach einem der Ansprüche 1 bis 6, **dadurch gekennzeichnet, dass** das Sicherungselement (45) in seinem radial außen liegenden Umfangsbereich mehrere radial nach innen gerichtete Aussparungen (47) aufweist, von welchen jede zur Aufnahme jeweils eines Zugelementes (1) im Bereich des Zugsteges (3) dient.

8. Zugvorrichtung nach einem der Ansprüche 1 bis 6, **dadurch gekennzeichnet, dass** der Durchmesser der Durchgangsbohrung (41, 46) des Stützelementes (40, 45) und der Durchmesser des Druckstückes (72) derart aufeinander abgestimmt sind, dass das Druckstück (72) durch das Sicherungselement (40, 45) konzentrisch zwischen den Zugelementen (1) ausgerichtet ist.

## Claims

1. Pulling apparatus for a double clutch (35) which is arranged in an axially fixed manner on a transmission shaft (85) of a double clutch transmission and has a clutch housing (36) which has a circumferential housing web (37) which is accessible from the outside in the mounted state and is directed radially inwards, consisting of
- a supporting apparatus (51),
- a pressing apparatus (52) which is connected fixedly to the supporting apparatus (51) and has an axially adjustable push rod (67), by way of which the pressing apparatus (52) can be supported axially on the transmission shaft (85) during the pulling-off operation,
- a plurality of pulling elements (1) which are arranged in the circumferential region of the push rod (67) and can be brought into a pulling connection with the double clutch (35),
the pulling elements (1) having pulling webs (3) which project radially to the outside in their one end region and can be brought into engagement with the housing web (37) in a positively locking manner, and
a securing element (40, 45) being provided between the pulling elements (1), by means of which securing element (40, 45) the pulling elements (1) are secured in their engagement position,
**characterized**
**in that** the securing element (40, 45) is of plate-shaped configuration and has a central through bore (41, 46), through which a pressure piece (72) which can be placed onto the push rod (67) protrudes during use.

2. Pulling apparatus according to Claim 1, **characterized in that** the pulling webs (3) of the pulling elements (1) form stop webs (28) which project radially towards the inside over the pulling elements (3) and, during the pulling-off operation, can be brought into an operative connection with the securing element (40, 45) in such a way that the securing element (40, 45) moves together with the pulling elements (1).

3. Pulling apparatus according to Claim 1 or 2, **characterized in that** the supporting apparatus (51) has receiving slots (75, 76, 77) which run radially with respect to the pressing apparatus (52), and **in that** the pulling elements (1) are provided with guide elements (14) which are arranged in their other end region and onto which the supporting apparatus (51) can be placed by way of its receiving slots (75, 76, 77) such that it can be radially adjusted and fixed.

4. Pulling apparatus according to Claim 3, **characterized in that** the respective pulling element (1) forms a pulling shank (20) between the guide element (14) and the pulling web (3), which pulling shank (20) runs in a manner which is inclined obliquely radially to the inside towards the pressing apparatus (52).

5. Pulling apparatus according to Claim 4, **characterized in that** a securing pin (4) is provided in the region of the pulling shank (20), which securing pin (4) can be adjusted axially towards the pulling web (3) by means of an axial compression spring (26) and can be braced on the outer side against the clutch housing (36) or the housing web (37).

6. Pulling apparatus according to Claim 5, **characterized in that** the securing pin (4) has a head part (23) in its end region which lies towards the pulling web (3), in which head part (23) a permanent magnet (25) is arranged.

7. Pulling apparatus according to one of Claims 1 to 6, **characterized in that**, in its radially outer circumferential region, the securing element (45) has a plurality of radially inwardly directed cut-outs (47), of which each serves to receive in each case one pulling element (1) in the region of the pulling web (3).

8. Pulling apparatus according to one of Claims 1 to 6, **characterized in that** the diameter of the through bore (41, 46) of the supporting element (40, 45) and the diameter of the pressure piece (72) are adapted to one another in such a way that the pressure piece (72) is aligned concentrically between the pulling elements (1) by way of the securing element (40, 45).

## Revendications

1. Dispositif de traction pour un double embrayage (35) qui est disposé axialement de manière fixe sur un arbre de transmission (85) d'une transmission à double embrayage et qui présente un boîtier d'embrayage (36) qui présente une nervure de boîtier (37) périphérique, accessible de l'extérieur dans l'état monté et orientée radialement vers l'intérieur, constitué
- d'un dispositif de support (51),
- d'un dispositif de pressage (52) en liaison fixe avec le dispositif de support (51), qui présente une tige de pressage (67) déplaçable axialement avec laquelle le dispositif de pressage (52) peut s'appuyer axialement contre l'arbre de transmission (85) lors de l'opération de traction,
- de plusieurs éléments de traction (1) qui sont disposés dans la région périphérique de la tige de pression (67) et qui peuvent être amenés en liaison de traction avec le double embrayage (35),
les éléments de traction (1) présentant, dans l'une de leurs régions d'extrémité, des nervures de traction saillant radialement vers l'extérieur (3), pouvant être amenées en prise avec la nervure de boîtier (37) par engagement par correspondance de formes et
un élément de fixation (40, 45) étant prévu entre les éléments de traction (1), au moyen duquel les éléments de traction (1) sont fixés dans leur position d'engagement,
**caractérisé en ce que**
l'élément de fixation (40, 45) est réalisé sous forme de plaque et présente un alésage traversant central (41, 46), à travers lequel, pendant l'utilisation, passe une pièce de pression (72) pouvant être placée sur la tige de pression (67).

2. Dispositif de traction selon la revendication 1, **caractérisé en ce que** les nervures de traction (3) des éléments de traction (1) forment des nervures de butée (28) faisant saillie radialement vers l'intérieur au-delà des éléments de traction (3), lesquelles, lors de l'opération de traction, peuvent être amenées en liaison fonctionnelle avec l'élément de fixation (40, 45) de telle sorte que l'élément de fixation (40, 45) se déplace conjointement avec les éléments de traction (1).

3. Dispositif de traction selon la revendication 1 ou 2, **caractérisé en ce que** le dispositif de support (51) présente des fentes de réception (75, 76 et 77) s'étendant radialement par rapport au dispositif de pressage (52), et **en ce que** les éléments de traction (1) sont pourvus d'éléments de guidage (14) disposés dans leur autre région d'extrémité, sur lesquels le dispositif de support (51) avec ses fentes de réception (75, 76, 77) peut être placé de manière déplaçable radialement et de manière à pouvoir être fixé.

4. Dispositif de traction selon la revendication 3, **caractérisé en ce que** l'élément de traction respectif (1) forme entre l'élément de guidage (14) et la nervure de traction (3) une tige de traction (20) s'étendant radialement et obliquement vers l'intérieur de manière inclinée vers le dispositif de pressage (52).

5. Dispositif de traction selon la revendication 4, **caractérisé en ce que** dans la région de la tige de traction (20) est prévu un boulon de fixation (4) qui peut être déplacé au moyen d'un ressort de pression axiale (26) axialement vers la nervure de traction (3) et qui peut être serré du côté extérieur contre le boîtier d'embrayage (36) ou contre la nervure de boîtier (37).

6. Dispositif de traction selon la revendication 5, **caractérisé en ce que** le boulon de fixation (4) présente, dans sa région d'extrémité située vers la nervure de traction (3), une partie de tête (23) dans laquelle est disposé un aimant permanent (25).

7. Dispositif de traction selon l'une quelconque des revendications 1 à 6, **caractérisé en ce que** l'élément de fixation (45) présente dans sa région périphérique située radialement à l'extérieur plusieurs évidements orientés radialement vers l'intérieur (47), dont chacun sert à recevoir à chaque fois un élément de traction (1) dans la région de la nervure de traction (3).

8. Dispositif de traction selon l'une quelconque des revendications 1 à 6, **caractérisé en ce que** le diamètre de l'alésage traversant (41, 46) de l'élément de support (40, 45) et le diamètre de la pièce de pression (72) sont adaptés l'un à l'autre de telle sorte que la pièce de pression (72) soit orientée concentriquement entre les éléments de traction (1) à travers l'élément de fixation (40, 45).
